# EUROPEAN PATENT APPLICATION

(11) **EP 4 772 386 A1**
(43) Date of publication of application: **08.07.2026**
(21) Application number: 24858091.2
(22) Date of filing: 12.07.2024
(51) Int. Cl.: B60L 15/20

(54) **MOTOR CONTROLLER, POWERTRAIN AND CONTROL METHOD FOR CONTROLLING DRIVING MOTOR**

(30) Priority: 31.08.2023 CN 202311126970
(71) Applicant: Huawei Digital Power Technologies Co., Ltd., Shenzhen, Guangdong 518043 (CN)
(72) Inventor: YANG, Peng, Shenzhen, Guangdong 518043 (CN); LU, Chunhong, Shenzhen, Guangdong 518043 (CN); SHEN, Tianmin, Shenzhen, Guangdong 518043 (CN); GAO, Jiaxin, Shenzhen, Guangdong 518043 (CN)
(74) Representative: Maiwald GmbH
(86) International application number: PCT/CN2024/105158
(87) International publication number: WO 2025/044547

(57) **Abstract**

Embodiments of this application provide a motor control unit for an electric vehicle, a powertrain, and a control method for controlling a drive motor. The powertrain includes the motor control unit and the drive motor. The motor control unit is configured to: receive a torque signal and control the drive motor to output torque. The motor control unit is configured to: in response to that a decrease rate of a rotational speed of the drive motor is less than a preset rate and the rotational speed of the drive motor is less than a preset value, control the drive motor to output second positive torque, where the second positive torque is greater than a torque value indicated by the torque signal. In this way, under the effect of the second positive torque, a braking speed or deceleration of the vehicle is accurately adjusted. This slows down a trend of moving a center of gravity forward during braking of the vehicle and relieves vehicle shaking after the vehicle stops, and improves comfort of the vehicle during braking.

## Description

This application claims priority to Chinese Patent Application No. 202311126970.1, with the China National Intellectual Property Administration on August 31, 2023 and entitled "MOTOR CONTROL UNIT, POWERTRAIN, AND CONTROL METHOD FOR CONTROLLING DRIVE MOTOR", which is incorporated herein by reference in its entirety.

### TECHNICAL FIELD

This application relates to the field of electric vehicle power systems, and in particular, to a motor control unit, a powertrain, and a control method for controlling a drive motor.

### BACKGROUND

In a scenario in which a driver brakes a driving vehicle or an intelligent driving system brakes a driving vehicle, a "nod/frustration" phenomenon usually occurs on the vehicle. Especially when the vehicle is about to stop due to braking, more obvious frustration occurs in the vehicle. Generally, a powertrain or a suspension system of the vehicle is optimized to reduce the "nod/frustration" phenomenon. However, the "nod/frustration" phenomenon cannot be completely avoided.

To further avoid the "nod/frustration" phenomenon in the braking process of the vehicle and to achieve comfort braking effect, in a vehicle driving process, a comfort braking algorithm in a conventional technology is used to intentionally reduce braking pressure at a final braking stage. However, a signal transmission path of the existing comfort braking algorithm is long, resulting in a long response time of a braking system and increasing a braking distance.

### SUMMARY

In a braking process of a vehicle, a final braking stage is a process of a vehicle speed from very small to zero, that is, a process of the vehicle from close to stop to complete stop, that is, no relative motion on the ground. In the braking process of the vehicle, a suspension of the vehicle is compressed under the effect of a deceleration. After braking of the vehicle ends, although the vehicle has actually stopped, a body of the vehicle rebounds under the effect of the suspension. As a result, the vehicle generates vibration and "nod" phenomena, affecting driving experience of the vehicle. To resolve this problem, a comfort braking algorithm in a conventional technology is used to release particular wheel-side braking force at the final braking stage of the vehicle, to reduce the deceleration of the electric vehicle, so as to relieve the vibration and "nod" phenomena of the vehicle, thereby relieving braking shaking of the vehicle and improving driving comfort. However, the current comfort braking algorithm has a long signal transmission path and a long delay, which may lead to deterioration of braking performance. In view of this, embodiments of this application provide a motor control unit, a powertrain, and a control method for controlling a drive motor. The motor control unit provided in this application is configured to: when an electric vehicle is in non-emergency braking, control the drive motor to output torque, to reduce braking force output of the electric vehicle, thereby improving braking performance of the electric vehicle. The following describes in detail the motor control unit, the powertrain, and the electric vehicle.

Running of the electric vehicle includes a driving process and a braking process. The driving process is a process in which the drive motor of the electric vehicle outputs positive torque to drive wheels, so that the electric vehicle travels. The braking process is a process in which a braking system of the electric vehicle outputs friction braking force to wheels of the electric vehicle, so that a vehicle speed of the electric vehicle gradually decreases. In the braking process of the electric vehicle, the drive motor of the electric vehicle having an energy recovery function may also output negative torque to convert kinetic energy of the electric vehicle into electric energy, so as to generate an induced current. In addition, the negative torque output by the drive motor may also be used to provide braking force for the electric vehicle. The positive torque output by the drive motor means that a force output direction of the drive motor is the same as a rotational speed direction of the drive motor. The negative torque output by the drive motor means that a force output direction of the drive motor is opposite to a rotational speed direction of the drive motor.

According to a first aspect, an embodiment of this application provides a motor control unit used for an electric vehicle. The motor control unit includes an inverter circuit. The inverter circuit includes a plurality of bridge arms, and bridge arm midpoints of the plurality of bridge arms are used to connect to multi-phase windings of the drive motor. The motor control unit is configured to: receive a torque signal and control the drive motor to output torque. In a driving process of the electric vehicle, the motor control unit is configured to control the drive motor to generate first positive torque, where the first positive torque is used to respond to a torque value indicated by the torque signal. Specifically, in the driving process of the electric vehicle, a vehicle control unit calculates a vehicle torque requirement, and sends a torque signal to the motor control unit based on the vehicle torque requirement. The motor control unit controls, based on a torque value indicated by the torque signal, the drive motor to output torque, to drive the electric vehicle to travel.

In a braking process of the electric vehicle, in response to that a deceleration of the electric vehicle is less than a preset deceleration and a vehicle speed of the electric vehicle is less than a preset vehicle speed, the bridge arm midpoints of the plurality of bridge arms of the motor control unit output drive currents, so that the drive motor outputs second positive torque. The second positive torque is greater than the torque value indicated by the torque signal.

In the braking process, if the deceleration of the electric vehicle is less than the preset deceleration, it indicates that a braking mode of the electric vehicle is non-emergency braking in this case. In the non-emergency braking status of the electric vehicle, the speed of the electric vehicle gradually decreases. When the vehicle speed of the electric vehicle is less than the preset vehicle speed, it indicates that the electric vehicle is at a final braking stage. In this case, the inverter circuit of the motor control unit outputs the drive current, so that the drive motor outputs the second positive torque. Because the second positive torque is positive torque, the second positive torque enables the electric vehicle to generate an acceleration. Therefore, the deceleration of the electric vehicle can be reduced, and compression amounts of tires and a suspension of the electric vehicle can be reduced. In this way, "nod" and vibration of the electric vehicle are relieved, and driving experience of the electric vehicle is improved.

The motor control unit provided in this application may directly control, based on a braking status of the electric vehicle, the drive motor to output the second positive torque, to implement comfort braking of the electric vehicle. Because the motor control unit may directly output the second positive torque instead of controlling, according to an indication of the torque signal, the drive motor to output the torque, the motor control unit controls the second positive torque output by the drive motor to be greater than the torque value indicated by the torque signal.

For example, the speed and the deceleration of the electric vehicle may be obtained by the motor control unit based on a resolver signal obtained by a resolver sensor disposed on the drive motor. In this way, precision of the vehicle speed and the deceleration of the electric vehicle can be improved. In addition, because a sampling frequency of the resolver sensor is high, and the motor control unit can directly obtain the resolver signal, delays of obtaining the vehicle speed and the deceleration of the electric vehicle are reduced. In this way, the motor control unit can quickly determine the second positive torque based on the vehicle speed and the deceleration of the electric vehicle, to perform braking intervention.

In an implementation of the first aspect, in the braking process of the electric vehicle, in response to that negative torque is output through rotation of the drive motor, the deceleration of the electric vehicle is less than the preset deceleration, and the vehicle speed of the electric vehicle is less than the preset vehicle speed, the motor control unit controls the drive motor to reduce output of the negative torque. Rotation of the drive motor means that in the braking process of the electric vehicle, wheels of the electric vehicle drive the drive motor to rotate.

The electric vehicle usually has an energy recovery function. In the braking process, the motor control unit controls the drive motor to generate power to convert kinetic energy of the electric vehicle into electric energy to charge a power battery. In an energy recovery process, the drive motor outputs the negative torque, to provide regenerative braking force for the electric vehicle. At the final braking stage of the electric vehicle, the motor control unit may control the drive motor to reduce output of the negative torque, so as to reduce braking force imposed on the electric vehicle, thereby improving braking comfort and driving experience.

In an implementation of the first aspect, the motor control unit controls the drive motor to reduce a negative torque value output in the negative torque output process to be less than a negative torque value indicated by the torque signal.

As described above, in the braking process, the motor control unit may directly control, based on the braking status of the electric vehicle, the drive motor to reduce output of the negative torque. Therefore, a negative torque value output in the process in which the motor control unit controls the drive motor to reduce output of the negative torque is less than the negative torque value indicated by the torque signal.

In an implementation of the first aspect, in response to that a pedal stroke of a braking pedal is less than a preset value and the vehicle speed of the electric vehicle is less than the preset value, the motor control unit controls the drive motor to output the second positive torque.

In this example, if the pedal stroke of the braking pedal is less than the preset value, it indicates that the electric vehicle is in non-emergency braking in this case, and the motor control unit controls the drive motor to output the second positive torque.

In an implementation of the first aspect, in the braking process of the electric vehicle, in response to that the deceleration of the electric vehicle is greater than the preset deceleration or the braking pedal stroke indicated by a pedal stroke signal is greater than the preset value, the motor control unit is configured to control the drive motor to output the torque value indicated by the torque signal.

In the braking process of the electric vehicle, when the deceleration of the electric vehicle is greater than the preset deceleration or the braking pedal stroke is greater than the preset value, it indicates that a braking mode of the electric vehicle in this case is emergency braking, that is, the vehicle speed of the electric vehicle needs to be rapidly reduced. When the braking mode of the electric vehicle is emergency braking, a braking response speed of the electric vehicle rather than braking comfort needs to be preferentially selected, and therefore, in this case, the motor control unit does not control the drive motor to output the second positive torque or reduce the negative torque output by the drive motor, but controls, according to an indication of the torque signal, the drive motor to output the torque value to ensure the braking speed of the electric vehicle.

In an implementation of the first aspect, a value of the second positive torque output by the motor control unit is positively correlated with the pedal stroke of the braking pedal. In other words, a larger pedal stroke indicated by the pedal stroke signal indicates larger required braking force, and correspondingly, indicates a larger value of the second positive torque output by the motor control unit. A smaller pedal stroke indicated by the pedal stroke signal indicates smaller required braking force, and correspondingly, indicates a smaller value of the second positive torque output by the motor control unit.

In an implementation of the first aspect, a value of the second positive torque output by the motor control unit is positively correlated with the speed of the electric vehicle. In other words, a larger speed of the electric vehicle indicates larger braking force required in the braking process, and correspondingly, indicates a larger value of the second positive torque output by the motor control unit. A smaller speed of the electric vehicle indicates smaller braking force required in the braking process, and correspondingly, indicates a smaller value of the second positive torque output by the motor control unit.

In an implementation of the first aspect, in response to that a decrease rate of a rotational speed of the drive motor is less than a preset rate and the rotational speed of the drive motor is less than a preset rotational speed, the motor control unit is configured to control the drive motor to output the second positive torque. In the braking process of the electric vehicle, the deceleration of the electric vehicle corresponds to the decrease rate of the rotational speed of the drive motor, and the vehicle speed of the electric vehicle corresponds to the rotational speed of the drive motor. Therefore, the motor control unit may also output the second positive torque based on a value of the decrease rate of the rotational speed of the drive motor and a value of the rotational speed of the drive motor as determining conditions, to improve braking comfort of the electric vehicle.

In an implementation of the first aspect, in a process in which the drive motor outputs the negative torque, in response to that the decrease rate of the rotational speed of the drive motor is greater than the preset rate and the rotational speed of the drive motor is less than the preset rotational speed, the motor control unit is configured to control the drive motor to reduce output of the negative torque.

In an implementation of the first aspect, in response to that the pedal stroke of the braking pedal is less than the preset value, the decrease rate of the rotational speed of the drive motor is greater than the preset rate, and the rotational speed of the drive motor is less than the preset rotational speed, the motor control unit is configured to control the drive motor to output the second positive torque.

In an implementation of the first aspect, the motor control unit is configured to connect to a motor rotational speed sensor, and the motor rotational speed sensor is configured to detect the rotational speed of the drive motor.

In an implementation of the first aspect, in response to that the drive motor stops outputting the second positive torque or the negative torque, the motor control unit is configured to control the torque value output by the drive motor to be the torque value indicated by the torque signal. The motor control unit provided in this application may directly adjust, based on a running status of the electric vehicle, the torque output by the drive motor when the electric vehicle is at the final braking stage, to reduce braking force of the electric vehicle, thereby improving braking comfort. When the drive motor stops outputting the second positive torque or the negative torque, the motor control unit returns to a normal state, that is, the motor control unit controls the torque value output by the drive motor to be the torque value indicated by the torque signal output by the vehicle control unit.

According to a second aspect, an embodiment of this application provides a powertrain. The powertrain includes a motor control unit and a drive motor, and the motor control unit is configured to: receive a torque signal and control the drive motor to output torque. In a driving process of an electric vehicle, the motor control unit is configured to control the drive motor to generate first positive torque, where the first positive torque is used to respond to a torque value indicated by the torque signal. In a braking process of the electric vehicle, in response to that a deceleration of the electric vehicle is less than a preset deceleration and a vehicle speed of the electric vehicle is less than a preset vehicle speed, the motor control unit controls the drive motor to generate second positive torque or reduce negative torque generated through rotation of the drive motor.

In the braking process of the electric vehicle, if a decrease rate of a rotational speed of the drive motor is greater than a preset rate and the rotational speed of the drive motor is less than a preset value, it indicates that the deceleration of the electric vehicle is small and the vehicle speed is small. In other words, a braking mode of the electric vehicle is non-emergency braking, and the electric vehicle is at a final braking stage. In this case, the motor control unit controls the drive motor to output the second positive torque to cancel braking force of the electric vehicle, so that the braking force of the electric vehicle is reduced, to relieve "nod" and vibration of the electric vehicle and improve driving experience.

In an implementation of the second aspect, the second positive torque is greater than the positive torque value indicated by the torque signal, and the negative torque is less than a negative torque value indicated by the torque signal.

In an embodiment, in a process in which the drive motor outputs the negative torque, in response to that the decrease rate of the rotational speed of the drive motor is greater than the preset rate and the rotational speed of the drive motor is less than the preset value, the motor control unit is configured to control the drive motor to reduce the negative torque.

In an embodiment, in response to that a pedal stroke indicated by a pedal stroke signal is less than a preset value, the decrease rate of the rotational speed of the drive motor is greater than the preset rate, and the rotational speed of the drive motor is less than the preset rotational speed, the motor control unit is configured to control the drive motor to output the second positive torque.

In an embodiment, the powertrain further includes a resolver, where the resolver is configured to detect the rotational speed and a rotor position of the drive motor.

According to a third aspect, an embodiment of this application provides a control method for controlling a drive motor. The control method includes:
receiving a torque signal, where the torque signal is used to indicate a torque requirement for the drive motor to drive an electric vehicle;
in a driving process of the electric vehicle, controlling the drive motor to generate first positive torque, where the first positive torque is used to respond to a torque value indicated by the torque signal; and
in a braking process of the electric vehicle, in response to that a deceleration of the electric vehicle is less than a preset deceleration and a vehicle speed of the electric vehicle is less than a preset vehicle speed, controlling the drive motor to generate second positive torque or reduce negative torque generated through rotation of the drive motor.

In an implementation of the third aspect, the second positive torque is greater than the positive torque value indicated by the torque signal, and the negative torque is less than a negative torque value indicated by the torque signal.

In an implementation of the third aspect, the control method includes:
in the braking process of the electric vehicle, in response to that a decrease rate of a rotational speed of the drive motor is greater than a preset decrease rate and the rotational speed of the drive motor is less than a preset rotational speed, controlling the drive motor to output the second positive torque or reduce the negative torque generated through rotation of the drive motor.

The motor control unit provided in the first aspect of this application and the motor control unit in the powertrain in the second aspect may be configured to perform the control method. The control method can improve braking performance, braking comfort, and driving experience of the electric vehicle. Specific beneficial effect is the same as that described in the motor control unit according to the first aspect or the powertrain according to the second aspect. Details are not described herein again.

### BRIEF DESCRIPTION OF DRAWINGS

FIG. 1 is a diagram of an electric vehicle 01 according to an embodiment of this application;
FIG. 2 is a diagram of a powertrain 10 according to an embodiment of this application;
FIG. 3 is a diagram of a motor control unit 11 according to an embodiment of this application;
FIG. 4 is a diagram of a braking system 30 according to an embodiment of this application;
FIG. 5 is a diagram of an execution principle of energy recovery according to an embodiment of this application;
FIG. 6 is a diagram of running of a braking process of an electric vehicle according to an embodiment of this application;
FIG. 7 is a diagram of running of another braking process of an electric vehicle according to an embodiment of this application; and
FIG. 8 is a diagram of running of another braking process of an electric vehicle according to an embodiment of this application.

### DESCRIPTION OF EMBODIMENTS

The following describes embodiments of this application with reference to the accompanying drawings in embodiments of this application. Terms used in implementations of embodiments of this application are merely used to explain specific embodiments of this application, and are not intended to limit this application.

With the development of electric vehicles, driving experience of the vehicle is increasingly concerned, and braking performance of the vehicle is a key factor that affects driving experience of the vehicle. In a braking process of the vehicle, a final braking stage is a process of a vehicle speed from very small to zero, that is, a process of the vehicle from close to stop to complete stop, that is, no relative motion on the ground. In the braking process of the vehicle, a suspension of the vehicle is compressed under the effect of a deceleration. After braking of the vehicle ends, although the vehicle has actually stopped, a body of the vehicle rebounds under the effect of the suspension. As a result, the vehicle generates vibration and "nod" phenomena, affecting driving experience of the vehicle. To resolve this problem, a comfort braking algorithm in a conventional technology is used to release particular wheel-side braking force at the final braking stage of the vehicle, to reduce the deceleration of the electric vehicle, so as to relieve the vibration and "nod" phenomena of the vehicle, thereby relieving braking shaking of the vehicle and improving driving comfort. However, the current comfort braking algorithm has a long signal transmission path and a long delay, which may lead to deterioration of braking performance. In view of this, embodiments of this application provide a motor control unit, a powertrain, and an electric vehicle. The motor control unit provided in this application is configured to: when an electric vehicle is in non-emergency braking, control the drive motor to output torque, to reduce braking force output of the electric vehicle, thereby improving braking performance of the electric vehicle. The following describes in detail the motor control unit, the powertrain, and the electric vehicle with reference to specific embodiments.

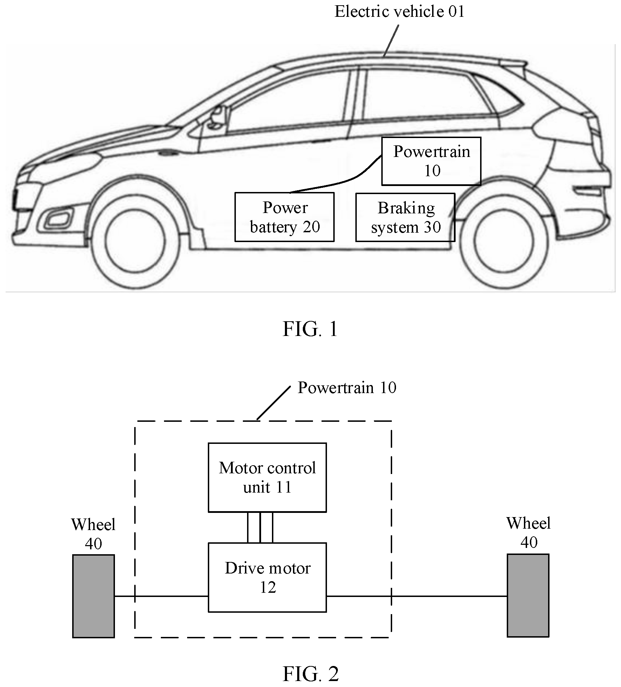

FIG. 1 is a diagram of an electric vehicle 01 according to an embodiment of this application. As shown in FIG. 1, the electric vehicle 01 includes a powertrain 10 and a power battery 20 connected to the powertrain 10. The powertrain 10 is configured to drive the electric vehicle 01. The power battery 20 is configured to supply electric energy to the powertrain 10. The powertrain 10 is configured to receive power supplied by the power battery 20 and provide power for the electric vehicle 01. The electric vehicle 01 further includes a braking system 30, and the braking system 30 is configured to provide braking force for the electric vehicle 01 when the electric vehicle 01 is in a braking status.

A running status of the electric vehicle 01 includes a driving status and a braking status. When the electric vehicle 01 runs in the driving status, the powertrain 10 is configured to output torque to drive wheels 40 to rotate. When the electric vehicle 01 is in the braking status, the powertrain 10 stops driving the wheels 40 to rotate, and the braking system 30 is configured to provide braking force for the wheels 40, so that a vehicle speed of the electric vehicle 01 decreases under the effect of the braking force. The driving status is a process in which a drive motor 12 of the electric vehicle 01 outputs positive torque to drive the wheels 40, so that the electric vehicle 01 travels. The braking status is a process in which the braking system 30 of the electric vehicle outputs friction braking force to the wheels 40 of the electric vehicle 01, so that a vehicle speed of the electric vehicle 01 gradually decreases. In the braking status of the electric vehicle 01, the drive motor 12 of the electric vehicle 01 having an energy recovery function may also output negative torque to convert kinetic energy of the electric vehicle 01 into electric energy, so as to generate an induced current. In addition, the negative torque output by the drive motor 12 may also be used to provide braking force for the electric vehicle 01. The positive torque output by the drive motor 12 means that a force output direction of the drive motor 12 is the same as a rotational speed direction of the drive motor 12. The negative torque output by the drive motor 12 means that a force output direction of the drive motor 12 is opposite to a rotational speed direction of the drive motor 12.

FIG. 2 is a diagram of a powertrain 10 according to an embodiment of this application. The powertrain 10 includes a motor control unit 11 and a drive motor 12. In a driving process of an electric vehicle 01, the motor control unit 11 converts a direct current from the power battery 20 into a three-phase alternating current, and the three-phase alternating current is used to drive the drive motor 12 to generate torque. The drive motor 12 is in a transmission connection to wheels 40 of the electric vehicle 01, and the torque of the drive motor 12 is transmitted to the wheels 40 to drive the wheels 40 to rotate.

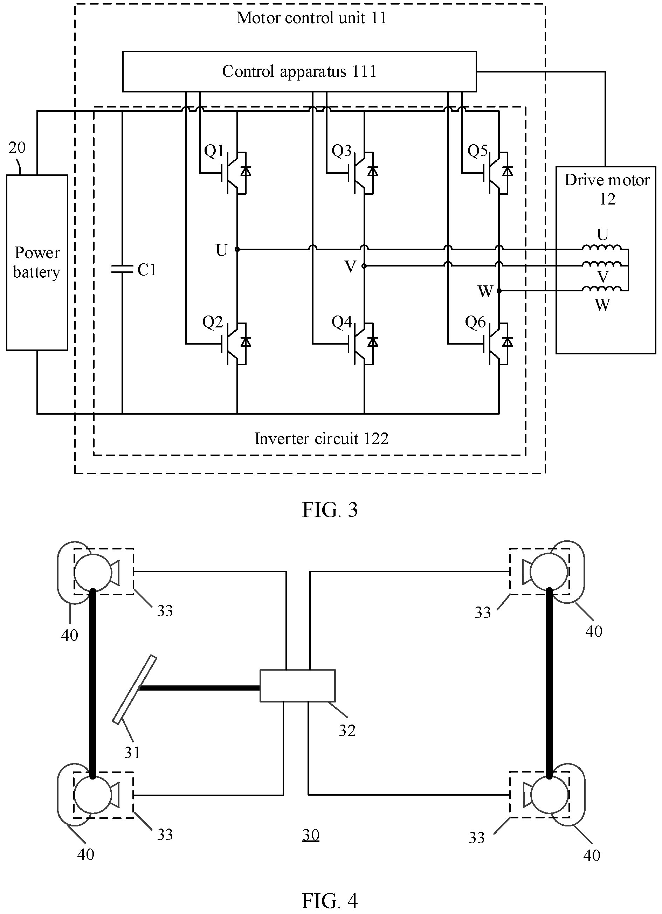

FIG. 3 is a diagram of a motor control unit 11 according to an embodiment of this application. As shown in FIG. 3, the motor control unit 11 is connected to a power battery 20 and a drive motor 12. The motor control unit 11 includes a control apparatus 111 and an inverter circuit 112. The inverter circuit 112 includes three switching transistor bridge arms. Each switching transistor bridge arm includes an upper bridge arm switching transistor and a lower bridge arm switching transistor, two ends of each switching transistor bridge arm are configured to receive a direct current from the power battery 20, and a bridge arm midpoint of each switching transistor bridge arm is configured to connect to one-phase winding of the drive motor 12. When the electric vehicle 01 is in a driving status, upper bridge arm switching transistors and lower bridge arm switching transistors of the three switching transistor bridge arms of the inverter circuit 112 are alternately conducted. The inverter circuit 112 is configured to convert the direct current from the power battery 20 into an alternating current and supply power to the drive motor 12.

In an embodiment, the drive motor 12 is a six-phase motor, the drive motor 12 includes six-phase windings, and the inverter circuit 112 of the motor control unit 11 includes six parallel-connected bridge arms. Bridge arm midpoints of the six bridge arms of the inverter circuit 112 are configured to drive the six-phase windings of the drive motor 12.

The control apparatus 111 is a module having a computing capability. For example, the control apparatus 111 may include one or more of a central processing unit (central processing unit, CPU), another general purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, a discrete hardware component, or the like.

For example, the control apparatus 111 may be a microcontroller (Microcontroller Unit, MCU). Optionally, the control apparatus 111 may alternatively be an apparatus integrating the microcontroller MCU and a vehicle control unit (Vehicle control unit, VCU), or the like. This is not limited in this solution.

In some possible implementations, the control apparatus 111 may be connected to a first communication bus. For example, the control apparatus 111 may include a communication side, and the communication side may be connected to the first communication bus. The control apparatus 111 may establish communication with another component in the electric vehicle 01 via the first communication bus, that is, the control apparatus 111 may directly obtain a signal via the first communication bus. For example, one or more of a vehicle speed, a torque signal, a braking signal, and the like may be obtained. Further, the control apparatus 111 may also upload a signal to the first communication bus, for example, one or more signals of output torque of the drive motor 12 or a current of the inverter circuit 112. For example, the first communication bus may be a controller area network (Controller Area Network, CAN) bus, for example, a chassis CAN bus of the electric vehicle 01.

In a possible implementation, the control apparatus 111 may be connected to a rotational speed detection apparatus. For example, the control apparatus 111 includes an input end, configured to receive a signal of a sensor, where the input end may be connected to the rotational speed detection apparatus. The rotational speed detection apparatus may be disposed on the drive motor 12 (for example, disposed on a rotor of the motor). In this case, the control apparatus 111 may receive a resolver signal and a rotational speed signal of the drive motor 12 from the rotational speed detection apparatus. For example, the rotational speed detection apparatus may be a resolver (that is, a resolver sensor), a motor rotational speed sensor, or the like. The resolver is configured to detect a rotational speed and a rotor position of the drive motor. The motor rotational speed sensor is configured to detect the rotational speed of the drive motor. For example, a structure of the powertrain 10 further includes the resolver.

In an embodiment, the control apparatus 111 may determine a vehicle speed of the electric vehicle, an acceleration (or a deceleration) of the electric vehicle, and the like based on the resolver signal of the drive motor 12. The control apparatus 111 may determine the rotational speed of the drive motor based on the resolver signal of the drive motor 12. Certainly, another parameter may be determined in another manner. This is not limited in this solution.

FIG. 4 is a diagram of a braking system 30 according to an embodiment of this application. The braking system 30 includes a braking pedal 31, a braking controller 32, and four actuators 33. When a driver steps down the braking pedal 31, the braking controller 32 generates a braking control signal based on a stroke of the braking pedal 31, and the four actuators 33 output braking force to corresponding wheels 40 according to an indication of the braking control signal, so that a vehicle speed of an electric vehicle 01 decreases. In a braking process of the electric vehicle 01, a larger stroke of the braking pedal 31 indicates larger braking force indicated by the braking signal, indicates larger braking force output by the four actuators 33, and indicates faster decrease in the vehicle speed of the electric vehicle 01.

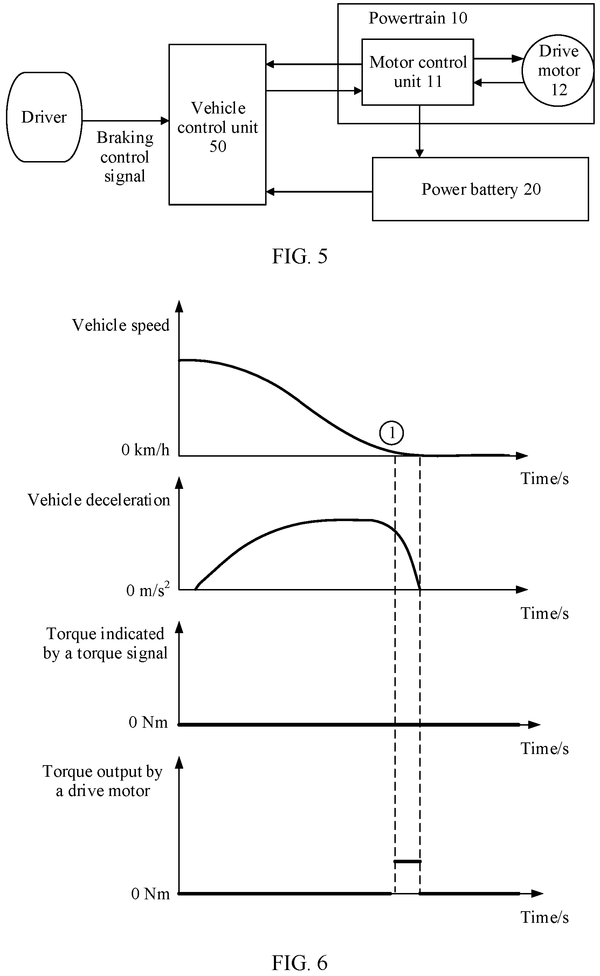

The electric vehicle 01 provided in this embodiment of this application further has an energy recovery function. Energy recovery means that when the electric vehicle 01 is in a braking status, the wheels 40 drive the drive motor 12 to rotate, the drive motor 12 runs in a power generation status and outputs negative torque, the drive motor 12 converts kinetic energy of the electric vehicle 01 into electric energy, and the drive motor 12 may also provide regenerative braking force for the electric vehicle 01 while generating power. FIG. 5 is a diagram of an execution principle of energy recovery. As shown in FIG. 5, when a driver steps down a braking pedal 31, a vehicle control unit 50 is configured to receive a braking control signal from a braking controller 32 and send an energy recovery instruction to a motor control unit 11, and the motor control unit 11 controls a drive motor 12 to run in a power generation status. The drive motor 12 rotates with wheels 40 and outputs a three-phase alternating current. The motor control unit 11 receives the three-phase alternating current output by the drive motor 12, converts the three-phase alternating current into a direct current, and charges a power battery 20.

Braking of the electric vehicle 01 is classified into emergency braking and non-emergency braking. Emergency braking may be understood as a braking process in which the electric vehicle 01 quickly slows down. In the emergency braking process, a deceleration of the electric vehicle 01 is large. Non-emergency braking may be understood as a braking process in which the electric vehicle 01 slowly slows down. In the non-emergency braking process, a deceleration of the electric vehicle 01 is small. Whether a braking mode of the electric vehicle 01 is an emergency braking mode or a non-emergency braking mode may be determined based on the deceleration of the electric vehicle 01, a braking pedal stroke, a decrease rate of a rotational speed of the drive motor, or the like.

In an embodiment, if the deceleration of the electric vehicle 01 in the braking process of the electric vehicle 01 is greater than a preset deceleration, the braking mode of the electric vehicle 01 is the emergency braking mode. If the deceleration of the electric vehicle 01 in the braking process of the electric vehicle 01 is less than or equal to a preset deceleration, the braking mode of the electric vehicle 01 is the non-emergency braking mode. For example, the preset deceleration is 5 m/s².

In an embodiment, if the braking pedal stroke of the electric vehicle 01 in the braking process of the electric vehicle 01 is greater than a preset value, the braking mode of the electric vehicle 01 is the emergency braking mode. If the braking pedal stroke of the electric vehicle 01 in the braking process of the electric vehicle 01 is less than or equal to a preset value, the braking mode of the electric vehicle 01 is the non-emergency braking mode.

In an embodiment, if the decrease rate of the drive motor 12 in the braking process of the electric vehicle 01 is greater than a preset rate, the braking mode of the electric vehicle 01 is the emergency braking mode. If the decrease rate of the drive motor 12 in the braking process of the electric vehicle 01 is less than or equal to a preset rate, the braking mode of the electric vehicle 01 is the non-emergency braking mode.

If the braking mode of the electric vehicle 01 is emergency braking, braking efficiency and braking safety of the electric vehicle 01 need to be preferentially considered. In other words, when the braking mode of the electric vehicle 01 is emergency braking, the electric vehicle 01 needs to quickly stop based on braking force indicated by the braking controller 32. If the braking mode of the electric vehicle 01 is non-emergency braking, braking comfort and driving experience of the electric vehicle 01 need to be considered, that is, "nod" and vibration phenomena of the electric vehicle 01 at a final braking stage need to be reduced as much as possible. The motor control unit 11 provided in this embodiment of this application controls, at the final braking stage of the electric vehicle 01, the drive motor 12 to output second positive torque, so as to reduce total braking force of the electric vehicle 01, thereby improving braking comfort. A comfort braking solution provided in this application is applicable to the non-emergency braking scenario.

In the braking process of the electric vehicle, the final braking stage is a process of the vehicle speed of the electric vehicle 01 from very small to completely zero. At early and middle braking stages, a suspension and tires of the electric vehicle 01 are compressed under the effect of a braking deceleration. At the final braking stage, the suspension and the tires rebound, so that the electric vehicle has "nod" and vibration phenomena. In an embodiment, in the braking process of the electric vehicle, if the vehicle speed of the electric vehicle is less than a preset vehicle speed, the electric vehicle is at the final braking stage. In an embodiment, in the braking process of the electric vehicle, if the rotational speed of the drive motor is less than a preset vehicle speed, the electric vehicle is at the final braking stage.

The foregoing describes the architecture in embodiments of this application. The following describes, with reference to the accompanying drawings, how the motor control unit specifically controls the drive motor by considering a plurality of factors to implement comfort braking.

The following first introduces a scheme of controlling the drive motor by considering the deceleration and the vehicle speed to realize comfort braking.

In an embodiment, in a driving process of the electric vehicle, the motor control unit 11 is configured to control the drive motor 12 to generate first positive torque, where the first positive torque is used to respond to a torque value indicated by a torque signal. Specifically, in the driving process of the electric vehicle 01, a vehicle control unit 50 calculates a vehicle torque requirement, and sends a torque signal to the motor control unit 11 based on the vehicle torque requirement. The motor control unit 11 controls, based on a torque value indicated by the torque signal, the drive motor to output torque, to drive the electric vehicle 01 to travel.

In an embodiment, in a braking process of the electric vehicle 01, in response to that a deceleration of the electric vehicle 01 is less than a preset deceleration and a vehicle speed of the electric vehicle 01 is less than a preset vehicle speed, the bridge arm midpoints of the plurality of bridge arms of the inverter circuit 112 of the motor control unit 11 output drive currents, so that the drive motor 12 outputs second positive torque. The second positive torque is greater than the torque value indicated by the torque signal and the second positive torque is positive torque.

In the braking process of the electric vehicle, in response to that the deceleration of the electric vehicle 01 is less than the preset deceleration and the vehicle speed of the electric vehicle 01 is less than the preset vehicle speed, the bridge arm midpoints of the plurality of bridge arms of the motor control unit 11 output the drive currents, so that the drive motor outputs the second positive torque.

Specifically, in the braking process of the electric vehicle 01, the control apparatus 111 is configured to receive a braking signal from the braking controller 32, a vehicle speed signal from a vehicle speed sensor, and a deceleration signal from a deceleration sensor. In the braking process, if the deceleration of the electric vehicle 01 is less than the preset deceleration, it indicates that a braking mode of the electric vehicle 01 is non-emergency braking in this case. In the non-emergency braking status of the electric vehicle 01, the speed of the electric vehicle 01 gradually decreases. When the vehicle speed of the electric vehicle is less than the preset vehicle speed, it indicates that the electric vehicle is at a final braking stage. In this case, the inverter circuit of the motor control unit 11 outputs the drive current, so that the drive motor 12 outputs the second positive torque. Because the second positive torque is positive torque, the second positive torque enables the electric vehicle 01 to generate an acceleration. Therefore, the deceleration of the electric vehicle 01 can be reduced, and compression amounts of tires and a suspension of the electric vehicle 01 can be reduced. In this way, "nod" and vibration of the electric vehicle are relieved, and driving experience of the electric vehicle 01 is improved.

In the driving process of the electric vehicle 01, the electric vehicle 01 outputs the torque based on the torque value indicated by the torque signal output by the vehicle control unit 50. However, in a process in which the motor control unit 11 outputs the second positive torque, the motor control unit 11 outputs the second positive torque based on the speed and the deceleration of the electric vehicle 01, instead of outputting the second positive torque based on the torque signal indicated by the vehicle control unit 50. Therefore, the second positive torque output by the motor control unit 11 is inconsistent with the torque valuel indicated by the torque signal. Generally, in the braking process of the electric vehicle, the drive motor 12 needs to be controlled to stop outputting positive torque. The torque value indicated by the torque signal output by the vehicle control unit 50 is extremely small. Therefore, the second positive torque is greater than the torque value indicated by the torque signal.

For example, as shown in FIG. 6, in a driving process of the electric vehicle, the vehicle runs normally, a deceleration of the vehicle is 0, a torque value indicated by a torque signal output by the vehicle control unit is 0, and torque output by the drive motor is also 0. At an early braking stage of the vehicle, when a driver steps down a braking pedal, a braking system outputs braking force to reduce a vehicle speed of the electric vehicle and increase the deceleration of the electric vehicle. In this process, the torque value indicated by the torque signal output by the vehicle control unit is 0, and the torque output by the drive motor is also 0. When the electric vehicle is about to stop, at a final braking stage of the vehicle, if the deceleration of the electric vehicle is less than a preset deceleration and the vehicle speed of the electric vehicle is less than a preset vehicle speed, a braking mode of the electric vehicle is non-emergency braking. As shown in a time period ① in FIG. 6, an inverter circuit of the motor control unit outputs a drive current, so that the drive motor outputs second positive torque, and the second positive torque is positive torque. As the speed of the electric vehicle continuously decreases and the deceleration continuously decreases, until the deceleration of the electric vehicle is 0, the vehicle stops, and the inverter circuit of the motor control unit stops outputting the drive current, so that the drive motor stops outputting the second positive torque. In this case, the torque output by the drive motor is 0. In the entire braking process, torque values indicated by torque signals output by the vehicle control unit 50 are all 0.

The following describes a manner in which the motor control unit 11 determines a value of the second positive torque.

In an embodiment, the motor control unit 11 determines the second positive torque based on the vehicle speed and/or the deceleration of the electric vehicle 01.

Specifically, the motor control unit 11 may determine the second positive torque based on a comfort braking curve corresponding to the electric vehicle 01 as a reference curve. The motor control unit 11 pre-determines the comfort braking curve of the electric vehicle. For example, a speed curve and/or a deceleration curve of the electric vehicle 01 in a process in which the braking pedal is gradually loosened when the electric vehicle 01 is braked, and the electric vehicle 01 stops stably are/is recorded, and an ideal speed curve and/or an ideal deceleration curve of the electric vehicle 01 are/is drawn through a plurality of tests, that is, the comfort braking curve. The speed curve and/or the deceleration curve are/is used as a control basis, so that the electric vehicle 01 is braked based on the comfort braking curve as much as possible during braking. After the speed and/or the deceleration of the electric vehicle 01 are/is determined based on the speed curve and/or the deceleration curve, the second positive torque of the electric vehicle 01 may be determined.

In another embodiment, the motor control unit 11 obtains the second positive torque through calculation based on parameters such as the deceleration of the electric vehicle, mass of the electric vehicle 01, a transmission ratio of a power system, and a tire rolling radius. Total torque T used to cancel current deceleration braking of the electric vehicle may be estimated according to formulas F=m*a and T=m*a*r. F is total braking force of the electric vehicle 01, m is the mass of the electric vehicle, a is a current deceleration of the electric vehicle 01 (the deceleration is obtained based on a resolver signal), r is the tire rolling radius of the electric vehicle 01, and T is second positive torque at wheel ends during comfort braking of the electric vehicle 01. Then, second positive torque that is of the motor and that cancels current deceleration braking of the electric vehicle 01 may be calculated according to T=Te*i, where Te is the second positive torque of the motor during comfort braking of the electric vehicle, and i is the transmission ratio of the electric vehicle.

Certainly, the second positive torque may be calculated in another manner. This is not limited in this solution.

In specific implementation, the motor control unit 11 may receive a torque signal from the vehicle control unit 50. The motor control unit 11 may obtain the vehicle speed of the electric vehicle 01 based on the resolver signal of the drive motor 12. The deceleration of the electric vehicle 01 may be obtained by performing differential processing based on the vehicle speed of the electric vehicle 01. Certainly, the deceleration may be further obtained based on the deceleration sensor or the like. When the deceleration of the electric vehicle 01 is less than the preset deceleration and the vehicle speed of the electric vehicle 01 is less than the preset vehicle speed in the braking process of the electric vehicle 01, the motor control unit 11 calculates the second positive torque. For example, when the vehicle speed v of the electric vehicle 01 satisfies v1>v and the deceleration satisfies a>a1, the second positive torque starts to be calculated. v1 is the preset vehicle speed, and a1 is the preset deceleration. Certainly, there may also be another condition. For example, the vehicle speed v satisfies v1>v>v2 and the deceleration satisfies a>a1, and v2 is also the preset vehicle speed. This is not limited in this solution.

Further, the motor control unit 11 may output a first control signal based on the second positive torque, to control the inverter circuit to drive the drive motor to output the second positive torque.

In this example, braking intervention is performed based on the second positive torque generated by the drive motor 12. Under the effect of the second positive torque, the braking speed or deceleration of the vehicle is accurately adjusted, to ensure that no obvious "nod" phenomenon occurs in the braking process of the vehicle, thereby improving comfort braking effect. In this way, a trend of moving a center of gravity forward during braking of the vehicle and vehicle shaking after the vehicle stops can be reduced, thereby improving comfort of the vehicle during braking, effectively reducing a control delay, and reducing a braking distance.

In addition, the resolver signal may be obtained via a resolver sensor disposed on the drive motor 12, and then the vehicle speed and the deceleration of the electric vehicle are obtained based on the resolver signal. In this way, precision of the vehicle speed and the deceleration of the electric vehicle 01 can be improved. In addition, because a sampling frequency of the resolver sensor is high, and the motor control unit can directly obtain the resolver signal, delays of obtaining the vehicle speed and the deceleration of the electric vehicle are reduced. In this way, the motor control unit can quickly determine the second positive torque based on the vehicle speed and the deceleration of the electric vehicle, to perform braking intervention.

In an embodiment, in response to that a decrease rate of a rotational speed of the drive motor 12 is less than a preset rate and the rotational speed of the drive motor 12 is less than a preset rotational speed, the motor control unit 11 is configured to control the drive motor 12 to output the second positive torque.

Specifically, in the braking process of the electric vehicle 01, the motor control unit 11 is configured to receive the braking signal from the braking controller 32 and a rotational speed signal (the resolver signal) from the motor rotational speed sensor. For example, the motor control unit is connected to the motor rotational speed sensor. The motor rotational speed sensor is configured to detect the rotational speed of the drive motor. In this way, the motor control unit may receive, from the motor rotational speed sensor, the rotational speed signal of the drive motor, to obtain the rotational speed of the drive motor. In the braking process, the rotational speed of the drive motor 12 decreases as the speed of the electric vehicle 01 decreases, and the deceleration of the electric vehicle 01 corresponds to the decrease rate of the rotational speed of the drive motor 12. Therefore, in the braking process of the electric vehicle 01, when the decrease rate of the rotational speed of the drive motor 12 is less than the preset rate and the rotational speed of the drive motor 12 is less than the preset rotational speed, the motor control unit 11 is configured to control the drive motor 12 to output the second positive torque.

In a possible implementation, in the braking process of the electric vehicle 01, in response to that negative torque is output through rotation of the drive motor 12, the deceleration of the electric vehicle 01 is less than the preset deceleration, and the vehicle speed of the electric vehicle 01 is less than the preset vehicle speed, the motor control unit 11 is configured to control the drive motor 12 to reduce output of the negative torque.

If the energy recovery function is enabled in the braking process of the electric vehicle 01, the braking system 30 and an energy recovery system of the electric vehicle 01 jointly provide braking force for the electric vehicle. The four actuators 33 of the braking system 30 provide mechanical braking force for the electric vehicle 01. In an energy recovery process, the drive motor 12 runs in a power generation status and outputs the negative torque to provide regenerative braking force for the electric vehicle 01. In non-emergency braking of the electric vehicle 01, at a final braking stage, that is, when the vehicle speed of the electric vehicle 01 is less than the preset vehicle speed, the motor control unit 11 controls the drive motor 12 to reduce output of the negative torque, so as to reduce total braking force of the electric vehicle 01, thereby reducing nod and vibration phenomena in the braking process of the electric vehicle 01, and improving braking comfort and driving experience.

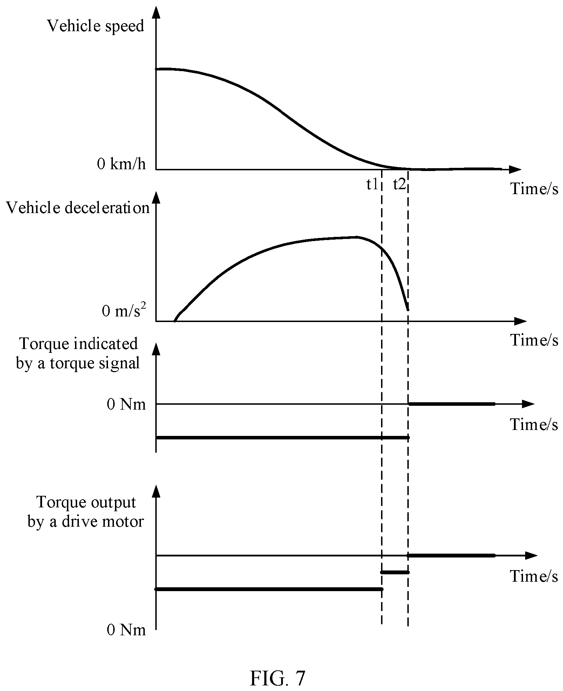

FIG. 7 is a diagram of controlling, by the motor control unit 11, the drive motor 12 to reduce output of the negative torque in the energy recovery process. As shown in FIG. 7, in a braking process of the electric vehicle 01, the motor control unit 11 controls, based on torque indicated by a torque signal, the drive motor 12 to output the negative torque. At a moment ① of a final braking stage, the motor control unit 11 controls the drive motor 12 to reduce output of the negative torque, so as to reduce overall braking force of the electric vehicle 01.

In this embodiment of this application, the motor control unit 11 directly controls, based on a speed and a deceleration of the electric vehicle 01 in the braking process, the drive motor 12 to output the negative torque, to reduce control response time, instead of controlling, based on the torque signal indicated by the vehicle control unit 50, the drive motor 12 to output the negative torque. Therefore, a negative torque value output by the drive motor 12 in the process of reducing output of the negative torque is less than a negative torque value indicated by the torque signal. It can be seen from FIG. 7 that, from a moment t1 to a moment t2 at which a vehicle speed of the electric vehicle 01 is reduced to zero, the negative torque value output by the drive motor 12 is less than the negative torque value indicated by the torque signal. The motor control unit 11 provided in this application directly controls output of the torque of the drive motor 12 in the braking process of the electric vehicle 01, instead of controlling, based on the torque signal output by the vehicle control unit 50, the torque output by the drive motor 12. The motor control unit 11 provided in this application can shorten a control path of torque control of the drive motor 12, thereby increasing a torque control speed, improving control efficiency of comfort braking, and increasing a response speed of comfort braking.

In an embodiment, in a process in which the drive motor 12 outputs the negative torque, in response to that the decrease rate of the rotational speed of the drive motor 12 is less than the preset rate and the rotational speed of the drive motor 12 is less than the preset rotational speed, the motor control unit 11 controls the drive motor 12 to reduce output of the negative torque. As described above, in the braking process of the electric vehicle 01, the decrease rate of the rotational speed of the drive motor 12 corresponds to the deceleration of the electric vehicle 01 and the rotational speed of the drive motor 12 corresponds to the vehicle speed of the electric vehicle 01.

In an embodiment, in the braking process of the electric vehicle 01, in response to that a stroke of the braking pedal 31 is less than a preset value and the vehicle speed of the electric vehicle 01 is less than the preset value, the motor control unit 11 is configured to control the drive motor to output the second positive torque

Specifically, in the braking process of the electric vehicle 01, a driver steps down the braking pedal 31, and the braking controller 32 converts the pedal stroke into a pedal stroke signal. In the braking process, if the pedal stroke indicated by the pedal stroke signal of the electric vehicle 01 is less than the preset value, it indicates that a braking mode of the electric vehicle 01 is non-emergency braking. In the non-emergency braking status of the electric vehicle 01, the speed of the electric vehicle 01 gradually decreases. When the vehicle speed of the electric vehicle is less than the preset vehicle speed, it indicates that the electric vehicle 01 is at a final braking stage. In this case, the inverter circuit 112 of the motor control unit 11 outputs a drive current, so that the drive motor 12 outputs the second positive torque. Because the second positive torque is positive torque, the second positive torque enables the electric vehicle 01 to generate an acceleration. Therefore, the deceleration of the electric vehicle 01 can be reduced, braking force of the electric vehicle 01 is reduced, and compression amounts of tires and a suspension of the electric vehicle 01 can be reduced. In this way, "nod" and vibration of the electric vehicle are relieved, and driving experience of the electric vehicle 01 is improved.

In an embodiment, in the braking process of the electric vehicle 01, in response to that the deceleration of the electric vehicle 01 is greater than the preset deceleration or the pedal stroke indicated by the pedal stroke signal is greater than the preset value, the motor control unit 11 controls the drive motor 12 to output the torque value indicated by the torque signal.

Specifically, in the braking process of the electric vehicle 01, the motor control unit is configured to receive a braking control signal from the braking controller 32 or a deceleration signal from a deceleration sensor. In the braking process, if the deceleration of the electric vehicle 01 is greater than the preset deceleration, it indicates that a braking mode of the electric vehicle 01 is emergency braking in this case. Alternatively, in the braking process, if the pedal stroke indicated by the pedal stroke signal of the electric vehicle 01 is greater than the preset value, it indicates that a braking mode of the electric vehicle 01 is emergency braking in this case. In the emergency braking status of the electric vehicle 01, when the driver steps down the braking pedal 31, the braking controller 32 generates the braking control signal based on the stroke of the braking pedal. In this case, the inverter circuit of the motor control unit 11 outputs the drive current, so that the drive motor 12 outputs the torque value indicated by the torque signal.

In other words, in the braking process of the electric vehicle, if the deceleration of the electric vehicle is greater than the preset deceleration, or the pedal stroke indicated by the pedal stroke signal is greater than the preset value, it indicates that the braking mode of the electric vehicle 01 is emergency braking. When the braking mode of the electric vehicle 01 is emergency braking, to ensure braking efficiency and braking safety of the electric vehicle 01, it needs to be ensured that braking force of the electric vehicle 01 in the braking process is always the braking force indicated by the braking controller 32. In the emergency braking mode, the comfort braking solution provided in this application for reducing braking force of the electric vehicle 01 at final braking stage does not take effect. Therefore, the motor control unit 11 controls the torque value output by the drive motor 12 to be the torque value indicated by the vehicle control unit 50.

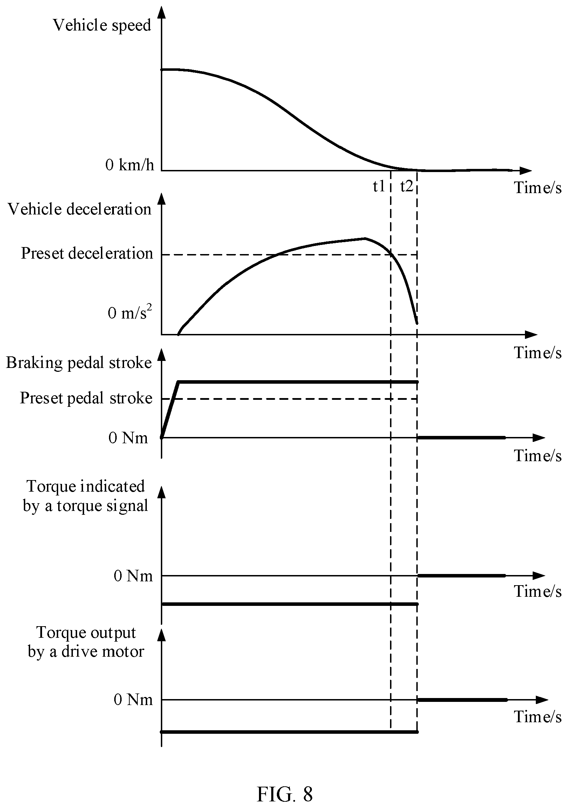

FIG. 8 is a diagram of the braking process of the electric vehicle in the emergency braking mode. As shown in FIG. 8, in the emergency braking mode, in the entire braking process, the torque output by the drive motor 12 is the same as the torque value indicated by the torque signal.

In another embodiment, a value of the second positive torque output by the motor control unit is positively correlated with the pedal stroke indicated by the pedal stroke signal.

A larger pedal stroke indicated by the pedal stroke signal indicates larger required braking force, and correspondingly, indicates a larger value of the second positive torque output by the motor control unit. A smaller pedal stroke indicated by the pedal stroke signal indicates smaller required braking force, and correspondingly, indicates a smaller value of the second positive torque output by the motor control unit.

In still another embodiment, a value of the second positive torque output by the motor control unit 11 is positively correlated with a speed of the electric vehicle 01. A larger speed of the electric vehicle 01 indicates larger braking force required in the braking process, and correspondingly, indicates a larger value of the second positive torque output by the motor control unit 11. A smaller speed of the electric vehicle 01 indicates smaller braking force required in the braking process, and correspondingly, indicates a smaller value of the second positive torque output by the motor control unit 11.

In an embodiment, in response to that the drive motor 12 stops outputting the second positive torque or the negative torque, the motor control unit 11 is configured to control the torque value output by the drive motor 12 to be the torque value indicated by the torque signal.

The motor control unit 11 provided in this embodiment of this application may directly adjust, based on a running status of the electric vehicle 01, the torque output by the drive motor 12 when the electric vehicle 01 is at the final braking stage, to reduce braking force of the electric vehicle 01, thereby improving braking comfort. When the drive motor 12 stops outputting the second positive torque or the negative torque, the motor control unit 11 returns to a normal state, that is, the motor control unit 11 controls the torque value output by the drive motor 12 to be the torque value indicated by the torque signal output by the vehicle control unit 50.

In an embodiment, the electric vehicle 01 may have one drive motor. The motor control unit 11 may control one drive motor 12 to generate the second positive torque. Alternatively, there may be a plurality of drive motors 12 in the electric vehicle 01. The motor control unit 11 may control one of the plurality of drive motors 12 to generate the second positive torque. The motor control unit 11 may alternatively control at least two of the plurality of drive motors 12 to generate torque based on a preset proportion, and a sum of the torque generated by the at least two drive motors is the second positive torque. The at least two drive motors 12 may be any of the plurality of drive motors 12. The preset proportion may be set randomly. For example, the at least two drive motors may evenly allocate the torque, or randomly allocate the torque. This is not limited in this solution. In this way, flexibility of motor control can be improved.

In this embodiment of this application, for example, control of the drive motor is described based on the vehicle speed, the deceleration, the rotational speed of the drive motor, the pedal stroke signal, and the like of the electric vehicle 01. Certainly, another condition may be alternatively used, for example, a gear, a driving mode, and the like of the electric vehicle. For example, if the driving mode of the electric vehicle is an economic intelligent driving mode, the gear of the electric vehicle is a forward gear, and the vehicle speed of the electric vehicle in the braking process of the electric vehicle is less than the preset vehicle speed, the drive motor is controlled to output the second positive torque or the like. This is not limited in this solution.

It should be noted that, in various embodiments of this application, unless otherwise stated or there is a logic conflict, terms and/or descriptions in various embodiments are consistent and may be mutually referenced, and technical features in different embodiments may be combined based on an internal logical relationship thereof, to form a new embodiment.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A motor control unit, wherein the motor control unit receives a torque signal and is configured to:
in a driving process of an electric vehicle, control a drive motor to generate first positive torque, wherein the first positive torque is used to respond to a torque value indicated by the torque signal; and
in a braking process of the electric vehicle, in response to that a deceleration of the electric vehicle is less than a preset deceleration and a vehicle speed of the electric vehicle is less than a preset vehicle speed, control the drive motor to generate second positive torque or reduce negative torque generated through rotation of the drive motor.

2. The motor control unit according to claim 1, wherein in the braking process of the electric vehicle, the second positive torque is greater than the positive torque value indicated by the torque signal, and the negative torque is less than a negative torque value indicated by the torque signal.

3. The motor control unit according to claim 1 or 2, wherein the motor control unit comprises an inverter circuit, the inverter circuit comprises a plurality of bridge arms, and bridge arm midpoints of the plurality of bridge arms are used to connect to multi-phase windings of the drive motor; and the inverter circuit is configured to output an alternating current for the drive motor to output the second positive torque; or
the inverter circuit is configured to: receive an induced current generated through rotation of the drive motor, and control the negative torque value output by the drive motor.

4. The motor control unit according to any one of claims 1 to 3, wherein the motor control unit is configured to:
in the braking process of the electric vehicle, in response to that a stroke of a braking pedal is less than a preset value and the vehicle speed of the electric vehicle is less than the preset value, control the drive motor to output the second positive torque.

5. The motor control unit according to any one of claims 1 to 4, wherein the motor control unit is configured to:
in the braking process of the electric vehicle, in response to that the deceleration of the electric vehicle is greater than the preset deceleration or the stroke of the braking pedal is greater than the preset value, control the drive motor to output the torque value indicated by the torque signal.

6. The motor control unit according to claim 4 or 5, wherein the motor control unit controls a value of the second positive torque output by the drive motor to be positively correlated with the stroke of the braking pedal; or
the motor control unit controls a value of the second positive torque output by the drive motor to be positively correlated with the speed of the electric vehicle.

7. The motor control unit according to any one of claims 1 to 6, wherein the motor control unit is configured to:
in the braking process of the electric vehicle, in response to that a decrease rate of a rotational speed of the drive motor is greater than a preset decrease rate and the rotational speed of the drive motor is less than a preset rotational speed, control the drive motor to output the second positive torque.

8. The motor control unit according to any one of claims 1 to 7, wherein the motor control unit is configured to:
in the braking process of the electric vehicle, in response to that the decrease rate of the rotational speed of the drive motor is less than the preset rate and the rotational speed of the drive motor is less than the preset rotational speed in a process in which the drive motor outputs the negative torque, control the drive motor to reduce output of the negative torque.

9. The motor control unit according to any one of claims 4 to 8, wherein the motor control unit is configured to:
in the braking process of the electric vehicle, in response to that the stroke of the braking pedal is less than the preset value, the decrease rate of the rotational speed of the drive motor is less than the preset rate, and the rotational speed of the drive motor is less than the preset rotational speed, control the drive motor to output the second positive torque.

10. The motor control unit according to any one of claims 1 to 9, wherein the motor control unit is configured to:
in response to that the drive motor stops outputting the second positive torque or the negative torque, control the torque value output by the drive motor to be the torque value indicated by the torque signal.

11. A powertrain, wherein the powertrain comprises a motor control unit and a drive motor, the motor control unit is configured to: receive a torque signal and control the drive motor to output torque, and the motor control unit is configured to:
in a driving process of an electric vehicle, control the drive motor to generate first positive torque, wherein the first positive torque is used to respond to a torque value indicated by the torque signal; and
in a braking process of the electric vehicle, in response to that a deceleration of the electric vehicle is less than a preset deceleration and a vehicle speed of the electric vehicle is less than a preset vehicle speed, control the drive motor to generate second positive torque or reduce negative torque generated through rotation of the drive motor.

12. The powertrain according to claim 11, wherein the second positive torque is greater than the positive torque value indicated by the torque signal, and the negative torque is less than a negative torque value indicated by the torque signal.

13. A control method for controlling a drive motor, wherein the control method comprises:
receiving a torque signal, wherein the torque signal is used to indicate a torque requirement for the drive motor to drive an electric vehicle;
in a driving process of the electric vehicle, controlling the drive motor to generate first positive torque, wherein the first positive torque is used to respond to a torque value indicated by the torque signal; and
in a braking process of the electric vehicle, in response to that a deceleration of the electric vehicle is less than a preset deceleration and a vehicle speed of the electric vehicle is less than a preset vehicle speed, controlling the drive motor to generate second positive torque or reduce negative torque generated through rotation of the drive motor.

14. The control method according to claim 13, wherein the second positive torque is greater than the positive torque value indicated by the torque signal, and the negative torque is less than a negative torque value indicated by the torque signal.

15. The control method according to claim 13 or 14, wherein the control method further comprises:
in the braking process of the electric vehicle, in response to that a decrease rate of a rotational speed of the drive motor is greater than a preset decrease rate and the rotational speed of the drive motor is less than a preset rotational speed, controlling the drive motor to output the second positive torque or reduce the negative torque generated through rotation of the drive motor.
